# EUROPÄISCHE PATENTANMELDUNG

(11) **EP 3 552 757 A1**
(43) Veröffentlichungstag der Anmeldung: **16.10.2019**
(21) Anmeldenummer: 19162581.3
(22) Anmeldetag: 13.03.2019
(51) Int. Cl.: B23P 19/06, F16C 9/04, B23P 15/00, B23D 31/00

(54) **SCHRAUBVORRICHTUNG UND SCHRAUBVERFAHREN**

(30) Priorität: 11.04.2018 DE 102018108621
(71) Anmelder: Alfing Kessler Sondermaschinen GmbH, 73433 Aalen (DE)
(72) Erfinder: Koch, Thomas, 73230 Kirchheim (DE)
(74) Vertreter: Patentanwälte Bregenzer und Reule Partnerschaftsgesellschaft mbB

(57) **Zusammenfassung**

Die Erfindung betrifft eine Schraubvorrichtung zur Verbindung zweier aus einem Motorbauteil-Grundkörper (100G) anhand einer Bruchtrennung hergestellter oder herzustellender Motorbauteil-Komponenten (K1, K2), insbesondere eines Pleuelfußes (101) und eines Pleueldeckels (107), eines Motorbauteils (100) anhand mindestens einer Schraube (120), wobei die Schraubvorrichtung (10) eine Werkstückhalterung zum Halten mindestens einer der Motorbauteil-Komponenten (K1, K2) sowie eine Schraubmaschine (70) zu einem Schrauben der mindestens einen Schraube (120) in die Motorbauteil-Komponenten (K1, K2) aufweist, wobei die Schraubmaschine (70) einen Antriebsstrang (170) mit einem insbesondere elektrischen Antriebsmotor (71) zum Antreiben eines Schraubwerkzeugs (82) aufweist, welches an einem Abtrieb (81) des Antriebsstrangs (170) angeordnet oder anordenbar ist. Die Erfindung betrifft ferner ein Schraubverfahren. Es ist vorgesehen, dass die Schraubmaschine (70) zwischen einem ersten Betriebsmodus und einem zweiten Betriebsmodus schaltbar ist, wobei der Antriebsstrang (170) in dem ersten Betriebsmodus eine höhere maximale Drehzahl und ein kleineres maximales Drehmoment als in dem zweiten Betriebsmodus an seinem Abtrieb (81) aufweist.

## Beschreibung

Die Erfindung betrifft eine Schraubvorrichtung zur Verbindung zweier aus einem Motorbauteil-Grundkörper anhand einer Bruchtrennung hergestellter oder herzustellender Motorbauteil-Komponenten eines Motorbauteils, insbesondere eines Pleuelfußes und eines Pleueldeckels, anhand mindestens einer Schraube, wobei die Schraubvorrichtung eine Werkstückhalterung zum Halten mindestens einer der Motorbauteil-Komponenten sowie eine Schraubmaschine zu einem Schrauben der mindestens einen Schraube in die Motorbauteil-Komponenten aufweist, wobei die Schraubmaschine einen Antriebsstrang mit einem insbesondere elektrischen Antriebsmotor zum Antreiben eines Schraubwerkzeugs aufweist, welches an einem Abtrieb des Antriebsstrangs angeordnet oder anordenbar ist. Die Erfindung betrifft ferner ein Schraubverfahren.

Motorbauteile, in der Regel also metallische Bauteile, werden anhand einer Bruchtrennung voneinander getrennt und anschließend wieder miteinander verschraubt. Beispielsweise werden Pleuel im Rahmen einer Bruchtrennung getrennt derart, dass ein Pleuelfuß unter einem Pleueldeckel entsteht. Der Pleueldeckel wird mit dem Pleuelfuß wieder verschraubt. Bei dieser Verschraubung sind hohe Anforderungen an die Präzision zu beachten. Insbesondere müssten die Pleueldeckel mit den Pleuelfüßen mit hohem Drehmoment verschraubt werden. Somit können die Motoren, die mit derartigen Pleueln ausgestattet sind, hohe Laufleistungen erreichen. Andererseits soll eine industrielle Fertigung mit hoher Geschwindigkeit geschehen. Daher werden die Schrauben bei Motorbauteilen zunächst von einer Schraubmaschine mit hoher Geschwindigkeit und geringem Drehmoment in die jeweiligen Motorbauteile eingeschraubt und an einer anderen Station mit einer anderen Schraubmaschine, deren Antriebsstrang ein höheres Drehmoment, jedoch eine kleinere maximale Drehzahl aufweist, fertiggeschraubt.

Das Verfahren ist allerdings umständlich.

Es ist daher die Aufgabe der vorliegenden Erfindung, eine verbesserte Schraubvorrichtung bereitzustellen.

Zur Lösung der Aufgabe ist vorgesehen, dass die Schraubmaschine zwischen einem ersten Betriebsmodus und einem zweiten Betriebsmodus schaltbar ist, wobei der Antriebsstrang in dem ersten Betriebsmodus eine höhere maximale Drehzahl und ein kleineres maximales Drehmoment als in dem zweiten Betriebsmodus an seinem Abtrieb aufweist.

Bei einem Schraubverfahren zur Verbindung zweier aus einem Motorbauteil-Grundkörper anhand einer Bruchtrennung hergestellter oder herzustellender Motorbauteil-Komponenten, insbesondere eines Pleuelfußes und eines Pleueldeckels, anhand mindestens einer Schraube, anhand einer Schraubvorrichtung, wobei die Schraubvorrichtung eine Werkstückhalterung zum Halten mindestens einer der Motorbauteil-Komponenten sowie eine Schraubmaschine zu einem Schrauben der mindestens einen Schraube in die Motorbauteil-Komponenten aufweist, wobei die Schraubmaschine einen Antriebsstrang mit einem insbesondere elektrischen Antriebsmotor zum Antreiben eines Schraubwerkzeugs aufweist, welches an einem Abtrieb des Antriebsstrangs angeordnet oder anordenbar ist, sieht zur Lösung der Aufgabe vor:
- Schrauben der mindestens einen Schraube in einem ersten Betriebsmodus der Schraubmaschine und in einem zweiten Betriebsmodus der Schraubmaschine, wobei der Antriebsstrang der Schraubmaschine in dem ersten Betriebsmodus eine höhere maximale Drehzahl und ein kleineres maximales Drehmoment als in dem zweiten Betriebsmodus an seinem Abtrieb aufweist und
- Schalten der Schraubmaschine zwischen dem ersten Betriebsmodus und dem zweiten Betriebsmodus.

Eine Schraubvorrichtung gemäß der Erfindung hat also eine Schraubmaschine oder eine Anordnung mehrerer Schraubmaschinen, die zwischen einem ersten Betriebsmodus und einem zweiten Betriebsmodus schaltbar ist oder sind. Der Antriebsstrang der Schraubmaschine ist flexibel. Er kann zwischen einem ersten Betriebsmodus geschaltet werden. Mit dem ersten Betriebsmodus wird mindestens eine Schraube oder werden mehrere Schrauben mit hoher maximaler Drehzahl und somit mit hoher Geschwindigkeit in das Motorbauteil geschraubt und anschließend sozusagen fertiggeschraubt.

Der Mehraufwand für eine Schraubmaschine, die zwischen einem ersten und einem zweiten Betriebsmodus zu schalten ist, ist wesentlich kleiner als der Aufwand für eine Schraubvorrichtung, bei der für jeden der beiden Betriebsmodi eine separate Schraubmaschine notwendig ist, um eine einzelne Schraube zu schrauben. Dazu ist noch wesentlich, dass in der Regel pro Schraube eine Schraubmaschine einer Schraubvorrichtung vorgesehen ist. Wenn also beispielsweise ein Pleuel mit zwei Schrauben geschraubt wird, um den Pleueldeckel an dem Pleuelfuß zu befestigen, sind zwei Schraubmaschinen erforderlich. Im Gegensatz zu einer bekannten Schraubvorrichtung, bei der pro Schraube mindestens zwei voneinander verschiedene Schraubmaschinen mit unterschiedlichen Maximaldrehzahlen und maximal Drehmomenten benötigt werden, werden jedoch zwei Schraubmaschinen eingespart, weil die für die beiden Schrauben vorgesehenen beiden Schraubmaschinen die Schrauben sowohl mit hoher Geschwindigkeit als auch mit hoher maximaler Drehzahl schrauben können.

Diese Einsparung von Schraubmaschinen ist auch deshalb vorteilhaft, weil Schraubmaschinen für Motorbauteile in der Regel aufwendig sind. Neben dem Antriebsstrang weist die Schraubmaschine eine Sensorik zur Überwachung des Schraubvorgangs auf. Beispielsweise ist ein Drehmoment-Sensor unmittelbar am Abtrieb oder in der Nähe des Abtriebs vorgesehen, mit dem das Drehmoment überwachbar ist, mit dem die mindestens eine Schraube geschraubt wird. Auch die Schraub-Drehzahl wird sensorisch überwacht. Somit kann sichergestellt werden, dass die Schrauben in die Motorbauteile mit einem vorbestimmten Drehmoment und einer vorbestimmten Drehzahl geschraubt werden. Weiterhin ist eine sorgfältige Dokumentation des Schraubvorgangs erforderlich, um gegebenenfalls fehlerhafte Teile zu ermitteln. So können beispielsweise in einer Serie aufgetretene Fehler bei der Verschraubung anhand einer entsprechenden Überwachung ermittelt werden. Darüber hinaus sind für industrielle Verschraubungen von Motorbauteilen auch weitere Hilfsvorrichtungen, die Bestandteile der Schraubvorrichtung bilden oder bei dieser angeordnet sind, nötig, so zum Beispiel Positioniereinrichtungen, Fixiereinrichtungen und dergleichen, was nachfolgend noch deutlicher wird.

Weiterhin ist es vorteilhaft, wenn die Schraubmaschine mindestens einen Drehwinkelsensor aufweist, mit dem die Erfassung eines Drehwinkels, mit dem die Schraubmaschine die mindestens eine Schraube in das Motorbauteil schraubt, erfassbar ist. Mit dem Drehwinkelsensor kann beispielsweise die Schraube um eine vorbestimmte Anzahl von Umdrehungen oder Teil-Umdrehungen in das Motorbauteil eingeschraubt werden.

Besonders bevorzugt ist ein Konzept derart, dass bei Erreichen der nachfolgend noch erläuterten Kopf-Anlage die Schraube durch die Schraubvorrichtung noch um eine vorbestimmte Anzahl von Umdrehungen oder Teil-Umdrehungen eingedreht wird, um eine sogenannte Überelastische Verspannung zu erzielen.

Bei dem Motorbauteil handelt es sich zwar vorzugsweise um ein Pleuel. Es ist aber auch möglich, dass die Motorbauteil-Komponenten beispielsweise einen Motorblock und einen davon abgetrennten Motordeckel umfassen oder dadurch gebildet sind.

Bei der Schraubmaschine der Schraubvorrichtung ist es vorteilhaft, wenn sie eine Schraubmaschinen-Steuerungseinrichtung aufweist, die zur Ansteuerung der Schraubmaschine zum Schrauben der mindestens einen Schraube mit einem vorbestimmten Drehmoment und/oder einer vorbestimmten Drehzahl und/oder mit einem vorbestimmten Drehwinkel ausgestaltet ist. Der Drehwinkel kann beispielsweise nur eine Teilumdrehung umfassen, aber auch eine oder mehrere vollständige Umdrehungen. Weiter kann die Steuerungseinrichtung oder eine Überwachungseinrichtung dazu vorgesehen sein, eine Drehzahl und/oder ein Drehmoment mit dem die mindestens eine Schraube in das Motorbauteil durch den Antriebsstrang geschraubt wird, zu überwachen. Eine derartige Schraubmaschine-Steuerungseinrichtung kann als eine lokale und/oder einer einzelnen oder einzigen Schraubmaschine zugeordnete Schraubmaschinen-Steuerungseinrichtung ausgestaltet sein. Eine einer einzelnen Schraubmaschine zugeordnete Schraubmaschinen-Steuerungseinrichtung kann mit einer zentralen Steuerungseinrichtung der Schraubvorrichtung, die mindestens eine weitere Schraubmaschine steuert und/oder überwacht, gekoppelt sein, beispielsweise über ein Netzwerk, über Steuerverbindungen und/oder Überwachungsverbindungen oder dergleichen.

Bei der Schraubvorrichtung ist es vorteilhaft, wenn sie eine Steuerungseinrichtung zur Synchronisierung eines Schraubbetriebs der zwischen dem ersten und dem zweiten Betriebsmodus schaltbaren Schraubmaschine und mindestens einer weiteren Schraubmaschine aufweist, wobei die Schraubmaschinen zum synchronen Einschrauben von Schrauben in das Motorteil vorgesehen sind. So beginnt und endet beispielsweise der Schraubvorgang beider Schraubmaschinen gleichzeitig. Die weitere Schraubmaschine kann eine erfindungsgemäße Schraubmaschine sein, nämlich eine zwischen dem ersten und zweiten Betriebsmodus schaltbare Schraubmaschine, oder auch eine konventionelle, nicht schaltbare Schraubmaschine.

Zur Synchronisierung des Schraubbetriebs kann eine zentrale Schraubmaschinen-Steuerungseinrichtung vorgesehen sein, die mit einer jeweiligen einer einzelnen Schraubmaschine zugeordneten Schraubmaschinen-Steuerungseinrichtung kommuniziert. Es ist aber auch möglich, dass sich jeweils individuell einer Schraubmaschine zugeordnete, sozusagen lokale, Schraubmaschinen-Steuerungseinrichtungen abstimmen. So kann beispielsweise die Schraubvorrichtung zwei Schraubmaschinen aufweisen, die jeweils eine zugeordnete Schraubmaschinen-Steuerungseinrichtung aufweisen, die zur Synchronisierung der Schraubvorgänge miteinander kommunizieren, so dass beispielsweise die eine Schraubmaschinen-Steuerungseinrichtung ein Startsignal für die andere Schraubmaschinen-Steuerungseinrichtung gibt, wenn der Schraubvorgang beginnen soll. Auch während des Schraubvorgangs können sich die Schraubmaschinen-Steuerungseinrichtungen sozusagen abstimmen, beispielsweise um den Fortschritt des Schraubvorgangs wechselseitig zu kommunizieren und aufeinander abzustimmen.

Vorteilhaft ist es, wenn die Schraubvorrichtung mindestens zwei oder exakt zwei Schraubmaschinen aufweist, die zwischen dem ersten und zweiten Betriebsmodus schaltbar sind.

Insbesondere ist vorteilhaft, wenn die Schraubmaschinen zu einem simultanen Einschrauben von Schrauben in die Motorbauteil-Komponenten ausgestaltet oder vorgesehen sind.

Vorteilhaft ist weiterhin, wenn Sie mindestens einen Vorschubantrieb zum Vorschieben des Schraubwerkzeugs, besonders bevorzugt der gesamten Schraubmaschine, während eines Einschraubens der mindestens einen Schraube in die Motorbauteil-Komponenten aufweist. Der Vorschubantrieb kann beispielsweise die Schraubmaschine als Ganzes vorschieben, wenn diese sozusagen der Vorschubbewegung der in die Motorbauteil-Komponenten sich einschraubenden Schraube folgt. Es ist aber auch möglich, dass ein derartiger Vorschub integral in der Schraubmaschine vorgesehen ist, d.h. dass beispielsweise nur deren Schraubwerkzeug in Vorschubrichtung vor, ggf. auch wieder zurück, durch den Vorschubantrieb verstellbar ist.

Die erfindungsgemäße Schraubvorrichtung ist vorzugsweise eine stationäre Schraubvorrichtung, also eine beispielsweise in einer Fabrikhalle ortsfest angeordnete Schraubvorrichtung.

Die mindestens eine Schraubmaschine der Schraubvorrichtung kann ortsfest angeordnet sein, beispielsweise auf einem Untergrund ortsfest befestigt sein. Es ist aber auch möglich, dass die mindestens eine Schraubmaschine beweglich bezüglich einer Maschinenbasis der Schraubvorrichtung gelagert ist.

Vorteilhaft ist weiterhin eine Positioniereinrichtung zum Positionieren der Schraubmaschine, beispielsweise zu einem simultanen Positionieren auch zweier oder mehrerer Schraubmaschinen (wenn mehrere Schrauben zu schrauben sind), zwischen einer von der Werkstück-Halterung entfernten Warteposition und einer zu der Werkstück-Halterung hin verstellten Arbeitsposition, in welcher das an der Schraubmaschine angeordnete Schraubwerkzeug in Eingriff mit der Schraube ist oder, beispielsweise durch den bereits erwähnten Vorschubantrieb, in Eingriff bringbar ist. Beispielsweise umfasst die Positioniereinrichtung einen Schlitten, an dem eine oder mehrere Schraubmaschinen angeordnet ist/sind.

Die erfindungsgemäße Schraubvorrichtung kann einen Bestandteil einer Bruchtrennvorrichtung zum Bruchtrennen des Motorbauteil-Grundkörpers zur Herstellung der Motorbauteil-Komponenten bilden. Sie kann aber auch eine davon separate Schraubvorrichtung sein, d.h. dass sie beispielsweise in eine Fertigungsstraße oder Fertigungslinie, die eine Bruchtrennvorrichtung umfasst, integriert ist. Weiterhin ist möglich, dass die Schraubmaschine die Bruchtrennvorrichtung umfasst. Die Bruchtrenneinrichtung weist beispielsweise eines oder mehrere Spreizelemente auf. Das mindestens eine Spreizelement ist vorzugsweise in eine Lageröffnung des Motorbauteils einführbar, um die Motorbauteil-Komponenten voneinander zu trennen.

Weiterhin kann die Schraubvorrichtung eine Kerbeinrichtung zum Herstellen von Kerben in das Motorbauteil umfassen oder einen Bestandteil einer Gesamtanordnung bilden, die auch die Kerbeinrichtung umfasst. Diese Gesamtanordnung umfasst weiterhin vorteilhaft die Bruchtrennvorrichtung. Die Kerbeinrichtung umfasst beispielsweise eine Ritzeinrichtung, einen Laser oder dergleichen zum Herstellen mindestens einer Kerbe in dem Motorbauteil, insbesondere zum anschließenden Bruchtrennen. Die Kerbeinrichtung kann auch einen Bestandteil der Bruchtrennvorrichtung bilden, worauf noch zurückgekommen wird.

Zur Bereitstellung der verschiedenen Betriebsmodi sind verschiedene Möglichkeiten gegeben. An dieser Stelle sei noch ergänzt, dass die Schraubmaschine oder die Schraubmaschinen gemäß der Erfindung nicht nur den ersten und zweiten Betriebsmodus bereitstellen können, sondern auch weitere Betriebsmodi haben können. Das wird nachfolgend deutlicher.

Zur Bereitstellung des ersten Betriebsmodus' und des zweiten Betriebsmodus' weist die Schraubmaschine zweckmäßigerweise zwischen einem ersten Übersetzungsverhältnis und einem zweiten Übersetzungsverhältnis schaltbares Getriebe auf, wobei eine Drehzahl des Abtriebs bei gleicher Drehzahl des Antriebsmotors in dem ersten Übersetzungsverhältnis größer als in dem zweiten Übersetzungsverhältnis ist. Das schaltbare Getriebe ist zwischen dem Antriebsmotor und dem Abtrieb der Schraubmaschine angeordnet. Ein drittes oder weiteres Übersetzungsverhältnis ist ohne weiteres möglich oder denkbar, in welches das Getriebe schaltbar ist.

Bei dem Getriebe handelt es sich beispielsweise um ein Stirnradgetriebe, Planetengetriebe, Umlaufrädergetriebe oder dergleichen.

Vorteilhaft ist bei der Schraubmaschine eine Kupplung vorhanden, beispielsweise eine Klauenkupplung, Magnetkupplung oder dergleichen. Die Kupplung dient zum Auskuppeln des Schaltgetriebes von dem Antriebsmotor der Schraubmaschine für ein Schalten zwischen dem ersten Übersetzungsverhältnis und dem zweiten Übersetzungsverhältnis oder ggf. zwischen diesen und/oder weiteren Übersetzungsverhältnissen, die die Schraubmaschine aufweisen kann.

Vorteilhaft kann das Getriebe in einem stehenden Zustand geschaltet werden. Der Verschleiß ist gering. Maßnahmen zur Synchronisierung des Getriebes sind nicht notwendig, aber möglich.

An dieser Stelle sei aber erwähnt, dass eine Kupplung nicht unbedingt notwendig ist. Es ist durchaus möglich, dass das schaltbare Getriebe auch ohne ein Auskuppeln schaltbar ist. So kann beispielsweise ein von einem zuvor eingestellten Übersetzungsverhältnis abweichendes Übersetzungsverhältnis vorgewählt werden, welches das Getriebe einnimmt, sobald sich der Antriebsmotor in Betrieb setzt und dem eingestellten Übersetzungsverhältnis zugeordnete Zahnungen des Getriebes in Eingriff miteinander gelangen können.

Ohne weiteres möglich ist auch, dass die Schraubmaschine eine nicht schaltbares Getriebe aufweist oder eine Kombination von einem schaltbaren und einem nicht schaltbaren Getriebe. So kann beispielsweise eine Getriebestufe eines Getriebes lediglich der Drehzahlreduktion dienen, während eine weitere Getriebestufe des Getriebes schaltbar ist, zwischen dem ersten, zweiten oder optional weiteren Übersetzungsverhältn issen.

Ein nicht schaltbares Getriebe kann beispielsweise für die nachfolgende Ausgestaltung der Erfindung vorgesehen sein. Bei dieser ist aber selbstverständlich auch ein schaltbares Getriebe der Schraubmaschine möglich.

Der Antriebsmotor ist zweckmäßigerweise zur Bereitstellung des ersten Betriebsmodus und des zweiten Betriebsmodus zwischen einem ersten elektrischen Betriebsmodus und einem zweiten elektrischen Betriebsmodus ausgestaltet, wobei der Antriebsmotor in dem ersten Betriebsmodus eine höhere maximale Drehzahl an seinem Motor-Abtrieb als in dem zweiten Betriebsmodus aufweist.

So kann beispielsweise der erste elektrische Betriebsmodus eine Art Feldschwächung aufweisen oder darstellen, bei der die Drehzahl des Antriebsmotors bei gleicher am Antriebsmotor anliegender Spannung größer ist, jedoch das Drehmoment kleiner, während im zweiten elektrischen Betriebsmodus das Feld bzw. das Erregerfeld des Antriebsmotors nicht oder weniger geschwächt ist. Mithin ist es also vorteilhaft, wenn der Antriebsmotor eine Einrichtung zur Schwächung seines elektrischen Erregerfeldes aufweist.

Weiterhin ist es möglich, dass der Antriebsmotor eine erste Anordnung von Erregerwicklungen und eine zweite Anordnung von Erregerwicklungen aufweist, die selektiv bestrombar und/oder wahlweise seriell bzw. parallel bestrombar sind. So können beispielsweise zusätzliche Erregerwicklungen vorgesehen sein, die zur Bereitstellung eines höheren Drehmoments bestromt werden, die zur Bereitstellung einer höheren Drehzahl in dem ersten elektrischen Betriebsmodus nicht bestromt werden, zur Bereitstellung eines höheren Drehmoments jedoch in dem zweiten Betriebsmodus bestromt werden.

Die Schraubvorrichtung ist vorzugsweise zu einem Schrauben der mindestens einen Schraube in eine erste Schraubposition, in der die mindestens eine Schraube in eine erste Schraubposition, in der die mindestens eine Schraube eine Beweglichkeit der Motorbauteil-Komponenten für einen in Zusammenhang mit der Bruchtrennung der Motorbauteil-Komponenten stehenden Bearbeitungsschritt ermöglicht, und in eine zweite Schraubposition ausgestaltet, bei der die Motorbauteil-Komponenten durch die mindestens eine Schraube fest aneinander gehalten sind. Mithin sind also die Motorbauteil-Komponenten in der zweiten Schraubposition der Schraube fester aneinander gehalten als in der ersten Schraubposition.

So eignen sich beispielsweise der erste Betriebsmodus vorteilhaft zum Schrauben der mindestens einen Schraube in die erste Schraubposition und der zweite Betriebsmodus für das Schrauben der mindestens einen Schraube in die zweite Schraubposition optimal. Wenn die Schraube als nur verhältnismäßig lose in das Motorbauteil einzuschrauben ist oder ein geringeres Drehmoment erforderlich ist, wird sie mit dem ersten Betriebsmodus, also vorteilhaft sehr schnell, in das Motorbauteil eingeschraubt, während für das Festschrauben oder insbesondere finale Schrauben der mindestens einen Schraube der zweite Betriebsmodus vorgesehen ist.

Die Schraube kann in der ersten Schraubposition derart weit in das Motorbauteil oder die Motorbauteil-Komponenten eingeschraubt sein, dass ihr Kopf bereits an einer Kopf-Anlagefläche des Motorbauteils anliegt, beispielsweise an einem Pleueldeckel. Bevorzugt ist jedoch, wenn die Schraubmaschine zu einem Schrauben der mindestens einen Schraube in die erste Schraubposition derart ausgestaltet ist, dass ein Kopf der Schraube von einer zur Anlage des Kopfes vorgesehenen Kopf-Anlagefläche an einer der beiden Motorbauteil-Komponenten, beispielsweise des Pleueldeckels, einen vorbestimmten Abstand aufweist. Dabei ist es möglich, dass die Schraubvorrichtung beispielsweise einen Sensor aufweist, insbesondere einen Tiefenanschlag oder dergleichen, zur Ermittlung oder zur Einhaltung des Abstandes des Kopfes zu der Kopf-Anlagefläche. So kann beispielsweise ein Abstandssensor, der den Abstand zwischen Kopf und Kopf-Anlage misst, vorgesehen sein. Der Abstandsensor kann einen Bestandteil der Schraubmaschine bilden, so dass er beispielsweise einen Vorschub des Schraubwerkzeugs in Richtung des Motorbauteils überwacht und ggf. ein entsprechendes Abstandssignal sendet, mit welchem insbesondere die Schraubmaschinen-Steuerungseinrichtung die Schraubmaschine abschaltet. Es ist auch möglich, dass die Schraubmaschine die jeweilige Schraube um eine vorbestimmte Anzahl von Umdrehungen oder eine Teilumdrehung in die Motorbauteil-Komponenten einschraubt und/oder ausschraubt, um den vorgenannten Abstand oder einen Arbeitsabstand einzustellen. In dem Arbeitsabstand können beispielsweise die Bruchtrennflächen gereinigt werden.

Bevorzugt ist es, wenn die Schraubmaschine zum Anziehen der jeweiligen Schraube, wenn der Kopf der Schraube bereits die Kopf-Anlagefläche erreicht hat oder an der Kopf-Anlagefläche anliegt, um eine vorbestimme Anzahl von Umdrehungen oder Teilumdrehungen ausgestaltet ist, beispielsweise anhand der bereits erläuterten Schraubmaschinen-Steuerungseinrichtung. Bevorzugt ist ein sogenanntes überelastisches Anschrauben oder Einschrauben der Schraube in das Motorbauteil durch die Schraubmaschine erreichbar. Insbesondere in diesem Zusammenhang ist vorteilhaft, wenn die Schraubmaschine zur Abgabe eines entsprechend hohen Drehmoments bzw. zum Ein- oder Weiterschrauben der Schraube mit hohem Drehmoment geeignet ist.

In der Praxis ist die nachfolgende Vorgehensweise bevorzugt, die insbesondere bei bruchgetrennten Motorbauteilen vorteilhaft ist.

Die Schraubmaschine ist zweckmäßigerweise zu einem Schrauben der mindestens einen Schraube in eine erste Anlageposition, bei der der Kopf an der Kopf-Anlagefläche anliegt, und zu einem anschließenden Lösen der mindestens einen Schraube derart, dass ihr Kopf von der Kopfanlagefläche den vorbestimmten Abstand aufweist und/oder dass Bruchtrennflächen zwischen den Motorbauteil-Komponenten in einen vorbestimmten Arbeitsabstand bringbar sind, ausgestaltet. Die Motorbauteil-Komponenten werden dadurch im Bereich der Bruchtrennflächen zunächst aneinander gepresst, wobei sich an den Bruchtrennflächen zwischen den Motorbauteil-Komponenten lose anhaftende oder noch nicht vollständig gelöste Partikel ablösen, also beispielsweise abbrechen. Beim anschließenden Lösen dieser Schraubverbindung um ein vorbestimmtes Maß, so dass der Kopf der Schraube von der Kopf-Anlagefläche einen Abstand oder jedenfalls die Bruchtrennflächen voneinander in einen Abstand oder Arbeitsabstand bringbar sind, kommen die Bruchtrennflächen voneinander frei oder können voneinander weg bewegt werden, zum Beispiel um die Bruchtrennflächen zu reinigen.

Dabei ist es möglich, dass die Bruchtrennflächen sich sozusagen selbst voneinander lösen, z.B. wenn die Schraube ausgeschraubt wird oder das Motorbauteil zu Vibrationen angeregt wird. Es ist aber auch vorteilhaft, wenn eine Löseeinrichtung, beispielsweise mit einem Hebel oder dergleichen, vorgesehen ist, um die Motorbauteil-Komponenten nach dem Lösen der mindestens einen Schraube voneinander zu entfernen. Wenn nämlich die Bruchtrennflächen der Motorbauteil-Komponenten noch zunächst aneinanderhaften, kann die aktive Löseeinrichtung die Bruchtrennflächen voneinander lösen.

Die vorgenannten Vorgänge laufen sehr schnell ab, weil nämlich die Schraubmaschine in dem ersten Betriebsmodus die Schraube bis zur sogenannten Kopf-Anlage, bei der der Kopf an der Kopf-Anlagefläche anliegt, anschrauben kann und anschließend ebenfalls wieder sehr schnell löst, so dass unmittelbar danach mit der Reinigung der Bruchtrennflächen oder des Abstands zwischen den Motorbauteil-Komponenten begonnen werden kann

Nachdem die Bruchtrennflächen gereinigt sind, ist es vorteilhaft, wenn die Schraubvorrichtung die mindestens eine Schraube wieder bis zu der sogenannten Kopf-Anlage in das Motorbauteil eingeschraubt, sodass dessen Motorbauteil-Komponenten fest miteinander verbunden sind. Dabei ist auch das bereits erläuterte überelastische Anschrauben oder Einschrauben vorteilhaft.

Vorteilhaft ist vorgesehen, dass die Schraubvorrichtung die Schraubmaschine mit dem zweiten Betriebsmodus zum Schrauben der mindestens einen Schraube in die erste Schraubposition betreibt, wenn die mindestens eine Schraube mit dem ersten Betriebsmodus nicht in die erste Schraubposition einschraubbar ist. Mithin schaltet also die Schraubmaschine sozusagen auf ein höheres Drehmoment um, wenn sich die Schraube nicht in die erste Schraubposition schrauben lässt. So kann für die vorgenannte Kopf-Anlage notwendig sein, dass die Schraubmaschine die Schraube fester andreht. Weiterhin ist es möglich, dass die Schraubvorrichtung unterschiedliche Motorbauteile zu schrauben hat, beispielsweise aufgrund von Serienstreuungen oder weil unterschiedliche Typen von Motorbauteilen zu bearbeiten sind, insbesondere unterschiedlich große Pleuel, so dass die Schraubvorrichtung und insbesondere deren Schraubmaschine individuell auf die jeweilige Betriebssituation einstellbar sind.

Das maximale Drehmoment ist in dem zweiten Betriebsmodus vorzugsweise mindestens doppelt so groß, insbesondere dreimal so groß wie das maximale Drehmoment in dem ersten Betriebsmodus. Das maximale Drehmoment des zweiten Betriebsmodus kann sogar viermal oder fünfmal, aber auch sechsmal, siebenmal oder zehnmal so groß sein wie das maximale Drehmoment in dem ersten Betriebsmodus. So kann beispielsweise das Drehmoment im ersten Betriebsmodus etwa 10 - 20 Newtonmeter, insbesondere 12 - 17 Newtonmeter betragen. Im zweiten Betriebsmodus ist das Drehmoment wesentlich höher, so dass es beispielsweise sogar bis zu 150 Newtonmeter betragen kann.

Die Drehzahl des ersten Betriebsmodus ist zweckmäßigerweise im gleichen Verhältnis wie das Drehmoment umgekehrt proportional. So kann die Drehzahl in dem ersten Betriebsmodus beispielsweise etwa 2000 Umdrehungen pro Minute betragen, während im zweiten Betriebsmodus mit deutlich geringerer Drehzahl geschraubt wird.

Die Werkstückhalterung ist zweckmäßigerweise zu einem Halten des Motorbauteil-Grundkörpers für eine nach dem Schrauben der mindestens einen Schraube in die erste Schraubposition erfolgende Bruchtrennung ausgestaltet. So kann also das Motorbauteil sozusagen in der Werkstückhalterung bruchgetrennt werden. Eine Bruchtrennvorrichtung hierfür weist beispielsweise eine Kerbeinrichtung zum Kerben des Motorbauteils und/oder eine Spreizelementanordnung zum Aufspreizen des Motorbauteil-Grundkörpers, so dass die Motorbauteil-Komponenten gebildet werden, auf.

Die Werkstückhalterung weist zweckmäßigerweise einen Freiraum, beispielsweise eine Aussparung, eine oberseitige Öffnung und/oder eine unterseitige Öffnung oder dergleichen, auf, durch die bei der Bruchtrennung entstandene Partikel aus dem Bereich von Bruchtrennflächen der Motorbauteil-Komponenten entfernbar sind. Beispielsweise kann hierfür eine Vibrationseinrichtung und/oder eine Ausblaseinrichtung vorgesehen sein, so dass durch Vibration, ausblasen oder dergleichen die Partikel aus der Schicht der Bruchtrennflächen oder aus dem Zwischenraum zwischen den Motorbauteil-Komponenten entfernbar sind. Die Vibrationseinrichtung und/oder Ausblaseinrichtung kann einen Bestandteil der Schraubvorrichtung bilden. Die Vibrationseinrichtung kann z.B. Stöße, Schwingen oder dergleichen auf eine oder beide Motorbauteil-Komponenten, die Werkstückhalterung oder beide ausüben.

Weiterhin ist es möglich, dass die Schraubvorrichtung eine Bruchtrennvorrichtung zum Bruchtrennen des Motorbauteil-Grundkörpers aufweist. Für einen besonders effizienten, getakteten Betrieb eignet sich die nachfolgende Maßnahme:
Die Schraubvorrichtung ist zweckmäßigerweise zu einem Schalten der Schraubmaschine von dem ersten Betriebsmodus in den zweiten Betriebsmodus während des im Zusammenhang mit der Bruchtrennung der Motorbauteil-Komponenten bestehenden Bearbeitungsschritts ausgestaltet und/oder vorgesehen. Wenn also das Motorbauteil sozusagen ohnehin nicht für den Schraubvorgang bereitsteht, schaltet die Schraubmaschine zwischen dem ersten oder zweiten Betriebsmodus oder weiteren Betriebsmodi um.

In Zusammenhang mit der Ausblaseinrichtung und Vibrationseinrichtung wurde bereits angedeutet, dass der Bearbeitungsschritt, der in Zusammenhang mit der Bruchtrennung steht, vielfältig sein kann.

Der in Zusammenhang mit der Bruchtrennung der Motorbauteil-Komponenten stehende Bearbeitungsschritt umfasst beispielsweise eine Bruchtrennung des Motorbauteil-Grundkörpers. Bevorzugt ist jedoch auch, wenn dieser Bearbeitungsschritt eine Entfernung von bei der Bruchtrennung entstandener Partikel aus dem Bereich von Bruchtrennflächen der Motorbauteil-Komponenten oder aus einem Bereich zwischen den Motorbauteil-Komponenten umfasst, beispielsweise eine Vibration der Motorbauteil-Komponente, ein Ausblasen von Partikeln oder dergleichen.

Die Schraubvorrichtung ist zweckmäßigerweise mit weiteren Bearbeitungsmaschinen verkettet, beispielsweise einer Bruchtrennvorrichtung oder dergleichen.

Die Schraubvorrichtung weist zweckmäßigerweise eine Fördereinrichtung, z.B. ein Förderband, einen Roboter, einen Rundschalttisch oder dergleichen, zum Fördern der beiden Motobauteil-Komponenten und/oder des Motorbauteil-Grundkörpers in die Werkstückhalterung hinein auf.

Die Fördervorrichtung kann aber auch zum Fördern der die Motorbauteil-Komponenten oder den Motorbauteil-Grundkörper haltenden Werkstückhalterung von einer Bearbeitungsstation zu einer anderen Bearbeitungsstation vorgesehen sein oder aufweisen, wobei an einer der Bearbeitungsstationen die Schraubmaschine angeordnet ist. An dieser Bearbeitungsstation können selbstverständlich mehrere Schraubmaschinen, insbesondere zwischen den Betriebsmodi schaltbare Schraubmaschinen, vorgesehen sein. Es ist möglich, dass die Fördereinrichtung, insbesondere ein Rundschalttisch, mehrere Werkstückhalterungen aufweist. Die Fördereinrichtung ist vorteilhaft zur Positionierung jeweils einer Werkstückhalterung zu der mindestens einen Schraubmaschine hin und/oder von dieser weg ausgestaltet, sodass das von der Werkstückhalterung gehaltene Motorbauteil durch Verstellen oder Positionieren der Werkstückhalterung bezüglich der mindestens einen Schraubmaschine positionierbar ist.

Es ist also möglich, dass mit der Fördereinrichtung der Motorbauteil-Grundkörper und/oder die Motorbauteil-Komponenten sozusagen von Werkstückhalterung zu Werkstückhalterung vorgefördert werden. Es ist aber auch möglich, dass die Werkstückhalterung als Ganzes, wenn sie das Motorbauteil, also die Motorbauteil-Komponenten oder den Motorbauteil-Grundkörper hält, von Bearbeitungsstation zu Bearbeitungsstation vorgefördert wird.

Das Schalten der Schraubmaschine von dem ersten Betriebsmodus in den zweiten Betriebsmodus kann in einer Situation geschehen, bei der das Motorbauteil, also die Motorbauteil-Komponenten oder der Motorbauteil-Grundkörper, in ein und derselben Position bleibt. Bevorzugt ist vorgesehen, dass die Schraubvorrichtung, insbesondere deren Werkstückhalterung, zu einem Halten der Motorbauteil-Komponenten und/oder des Motorbauteil-Grundkörpers in derselben Halteposition für das Schrauben der mindestens einen Schraube mit dem ersten oder in dem ersten Betriebsmodus, beispielsweise zum Schrauben der Schraube in die erste Schraubposition, und für das Schrauben der mindestens einen Schraube mit oder in dem zweiten Betriebsmodus, beispielsweise in die zweite Schraubposition, ausgestaltet und vorgesehen ist. Mithin bleibt also das Motorbauteil an Ort und Stelle, während die Schraubmaschine von einem Betriebsmodus in den anderen Betriebsmodus geschaltet wird. So kann also die Schraube beispielsweise zunächst im Schnellgang mit hoher Drehzahl in das Motorbauteil eingeschraubt und anschließend in den zweiten Betriebsmodus mit hohem Drehmoment festgeschraubt werden.

Zwischen diesen beiden Schritten kann der bereits erwähnte und in Zusammenhang mit der Bruchtrennung stehende Bearbeitungsschritt stehen. Mithin ist also vorteilhaft, wenn die Schraubvorrichtung, insbesondere deren Werkstückhalterung, zu einem Halten der Motorbauteil-Komponente und/oder des Motorbauteil-Grundkörpers in derselben Halteposition für den Zusammenhang mit der Bruchtrennung stehenden Bearbeitungsschritt, insbesondere die Reinigung der Bruchtrennflächen oder eines Zwischenraums zwischen den Motorbauteilen-Komponenten, ausgestaltet und/oder vorgesehen ist.

Nachfolgend werden Ausführungsbeispiele der Erfindung anhand der Zeichnung erläutert. Es zeigen:
- Figur 1: Seitenansicht einer Schraubvorrichtung,
- Figur 2: eine schematische Ansicht einer Bearbeitungsmaschine für Motorbauteile, insbesondere Pleuel, von oben mit einer Schraubvorrichtung gemäß Figur 1,
- Figur 3: ein Prinzip Schaltbild der Schraubvorrichtung gemäß Figuren 1, 2,
- Figur 4: ein Motorbauteil in einer schematischen Ansicht im Zusammenhang mit einer Bruchtrennbearbeitung durch eine Bruchtrennvorrichtung der Bearbeitungsmaschine gemäß Figur 2,
- Figur 5: das Motorbauteil entsprechend Figur 4 in einer schematischen Ansicht im Zusammenhang mit der Montagebearbeitung durch die Schraubvorrichtung, und
- Figur 6: eine konventionelle Bearbeitungsmaschine für Motorbauteile, zum Beispiel Pleuel, von oben, enthaltend mehrere konventionelle Schraubvorrichtungen.

Eine Bearbeitungsmaschine 9 dient zur Bearbeitung von Motorbauteilen 100, insbesondere Pleueln. Die Motorbauteile 100 in der Bearbeitungsmaschine 9 derart bearbeitet, dass das Motorbauteil 100 in Motorbauteil-Komponenten K1 und K2 getrennt wird, wobei die Motorbauteil-Komponenten K1, K2 anschließend wieder miteinander verbunden werden, nämlich anhand von Schrauben 120. Sämtliche der vorgenannten Bearbeitungsschritte sind in der Bearbeitungsmaschine 9 realisierbar.

Die Bearbeitungsmaschine 9 weist eine Ladestation 20 zum Beladen und Entladen einer Fördereinrichtung 11 der Bearbeitungsmaschine 9 auf. An der Ladestation 20 lädt eine Fördereinrichtung 21, beispielsweise ein Roboter, insbesondere ein sogenannter Knickarm-Roboter, die Fördereinrichtung 11 mit den Motorbauteilen 100, also den zu bearbeitenden Werkstücken. Fertig bearbeitete Motorbauteile 100 werden von der Fördereinrichtung 21 von der Fördereinrichtung 11, beispielsweise einem Rundtisch, wieder entnommen.

An einer Kerbstation 30 werden in die Motorbauteile 100 Kerben eingebracht, so dass an einer Bruchtrennstation 40 der Bearbeitungsmaschine 9 die Motorbauteile 100 in die Komponenten K1 und K2 aufgetrennt werden können.

An einer Schraubstation 50 ist eine Schraubvorrichtung 10 vorgesehen, mit der die Motorbauteil-Komponenten K1 und K2 wieder miteinander verbunden werden können, nämlich anhand der Schrauben 120.

Die Fördereinrichtung 11 ist vorzugsweise als ein Rundtisch ausgestaltet, wobei jede andere Fördereinrichtung, beispielsweise ein Förderband, ein Kettenförderer, eine Fördereinrichtung für Werkstückpaletten oder dergleichen, ohne weiteres möglich wäre. Die Fördereinrichtung 10 weist eine Basis 12 auf, beispielsweise eine Säule, mit der die Fördereinrichtung 11 auf einem Untergrund U abgestellt ist. Die Säule oder Basis 12 steht vom Untergrund U ab und trägt einen Träger 13, beispielsweise einen Tisch, an dem die Werkstücke bzw. Motorbauteile 100 gehalten werden können. Der Träger 13 weist mehrere Haltearme 14 auf, die man auch als Trägerarme bezeichnen kann, an denen jeweils ein Werkstück oder Motorbauteil 100 anhand einer Werkstückhalterung 16 gehalten werden kann. An jedem Haltearm 14 ist eine Werkstückhalterung 16 vorgesehen, beispielsweise eine Werkstückaufnahme oder dergleichen.

Die Fördereinrichtung 11 weist vorliegend vier Haltearme 14 auf, die den vier Stationen, der Ladestation 20, der Kerbstation 30, der Bruchtrennstation 40 sowie der Schraubstation 50 jeweils gegenüberliegend positionierbar sind, indem der Träger 13 entsprechend verstellt wird. An einer oder mehreren der vorgenannten Stationen ist eine Stütze 15 vorgesehen, auf der sich ein jeweiliger Haltearm 14 abstützen kann.

Die Werkstückhalterung 16 kann eine offene Kassette sein, in der das jeweilige Motorbauteil 100 mit einem Bewegungsspiel einlegbar ist, was beispielsweise beim Bruchtrennen oder beim Schrauben vorteilhaft sein kann. Beispielsweise wird die Werkstückhalterund 16 von einer festen Stütze 17 sowie einer beweglichen Stütze 18 begrenzt, die das Motorbauteil 100 an seinen jeweiligen Längsendbereichen abstützen. Selbstverständlich können auch quer zu den Längsendbereichen weitere Stützvorsprünge oder Stützen vorgesehen sein, auf die nicht im Einzelnen eingegangen wird.

Der Roboter oder die Fördereinrichtung 21 weist eine Basis 22 auf, mit der die Fördereinrichtung 21 auf dem Untergrund U abgestellt ist. Von der Basis 22 steht ein Stützarm 23 ab, an der ein Knickarm 24 schwenkbeweglich gelagert ist. Der Stützarm 23 ist um eine wesentlichen vertikale Achse drehbar, der Knickarm 24 um eine im Wesentlichen horizontale Achse schwenkbar am Stützarm 23 angelenkt, so dass zwei oder weitere Drehfreiheitsgrade vorhanden sind. Jedenfalls kann die Fördereinrichtung 21 einen am freien Endbereich des Knickarms 24 angeordneten Greifer bequem positionieren, so dass die Fördereinrichtung 21 an einem Bereitstellungsplatz 26 bereitgestellte Motorbauteil-Grundkörper 100G aufnehmen und an der Ladestation 20 ablegen kann bzw. fertig bearbeitete Motorbauteile 100 von der Ladestation 20 entnehmen und auf einem Platz 27 oder einer Ablagestation 27 ablegen kann.

Die noch nicht bearbeiteten Motorbauteil-Grundkörper 100G kommen beispielsweise in einer Zuführrichtung Z am Bereitstellungplatz 26 an und werden in einer Abgaberichtung A vom Abgabeplatz 27 weg gefördert. Selbstverständlich kann ein Förderband oder eine sonstige Fördereinrichtung anstelle der beiden Plätze 26, 27 vorgesehen sein. Des Weiteren kann anstelle der Fördereinrichtung 21 auch eine Bedienperson vorgesehen sein.

Mithin ist also durch die obigen Maßnahmen eine effiziente und schnelle Vorförderung der jeweils zu bearbeitenden oder bearbeiteten Werkstücke oder Motorbauteile 100 möglich, so dass schnelle Taktzeiten möglich sind. Im Übrigen ist die Bearbeitungsmaschine 9 platzsparend aufgebaut, was noch deutlicher wird. Es ist nämlich nur eine einzige Schraubstation 50 vorgesehen, die äußerst effektiv und schnell arbeitet.

Von der Ladestation 20 fördert die Fördereinrichtung 11 die Motorbauteil-Grundkörper 100G zur Kerbstation 30, wo eine Kerbeinrichtung 31, beispielsweise umfassend einen Laser 32 oder eine Ritzeinrichtung, angeordnet ist. Hier beginnt die Bearbeitung des jeweiligen Motorbauteil-Grundkörpers 100G.

Die Motorbauteile 100 weisen beispielsweise Grundkörper auf, die später die Motorbauteil-Komponenten K1 bilden, sowie einen davon abzutrennenden Abschnitt auf, beispielsweise einen sogenannten Pleueldeckel 107, der die Motorbauteil-Komponente K2 bildet.

Der Grundkörper oder die Motorbauteil-Komponente K1 umfasst beispielsweise einen Pleuelfuß 101, der an seinem einen Längsende einen Lagerabschnitt 102 mit einer Lageröffnung 103 aufweist, die auch als kleines Auge bezeichnet wird. Der Grundkörper 104, beispielsweise eine Stange oder ein Stangenkörper, weist an seinem von dem Lagerabschnitt 102 entgegengesetzten Längsendbereich eine Lageröffnung 105 oder einen Teil derselben auf, die man auch als großes Auge bezeichnet. Die Lageröffnung 105 wird von Seitenarmen 106 des Grundkörpers 104 begrenzt, die mit Seitenarmen 106 des Pleueldeckels 107 verbunden oder verbindbar sind.

Durch die Seitenarme 106, 108 erstrecken sich Schraubaufnahmen 109, die jedoch in ihrer Längsrichtung getrennt sind, nämlich durch Bruchtrennflächen 110, die an der Bruchtrennstation 40 erzeugt werden.

Im fertig montierten Zustand des Motorbauteils 100 durchdringen die Schrauben 120 die Schraubaufnahmen 109 und sind beispielsweise im Bereich der Seitenarme 106 mit dem Grundkörper 104 verschraubt. Dabei dringt ein Bolzenabschnitt 121 in die Schraubaufnahme 109 ein, während sich ein Kopf 122 einer jeweiligen Schraube 120 an einer Kopf-Anlagefläche 111 des Pleueldeckels 107 abstützt. Somit spannen die Schrauben 120, die die Seitenarme 106, 108 an einander entgegengesetzten oder gegenüberliegenden Seiten der Lageröffnung 105 durchdringen, den Pleueldeckel 107 an den Pleuelfuß 101 oder verspannen die Motorbauteil-Komponenten K1, K2 miteinander. Man kann sich vorstellen, dass dazu eine erhebliche Kraft erforderlich ist, d.h. die noch im Detail zu beschreibende Schraubvorrichtung 10 an der Schraubstation 50 muss entsprechend große Spannkräfte aufweisen.

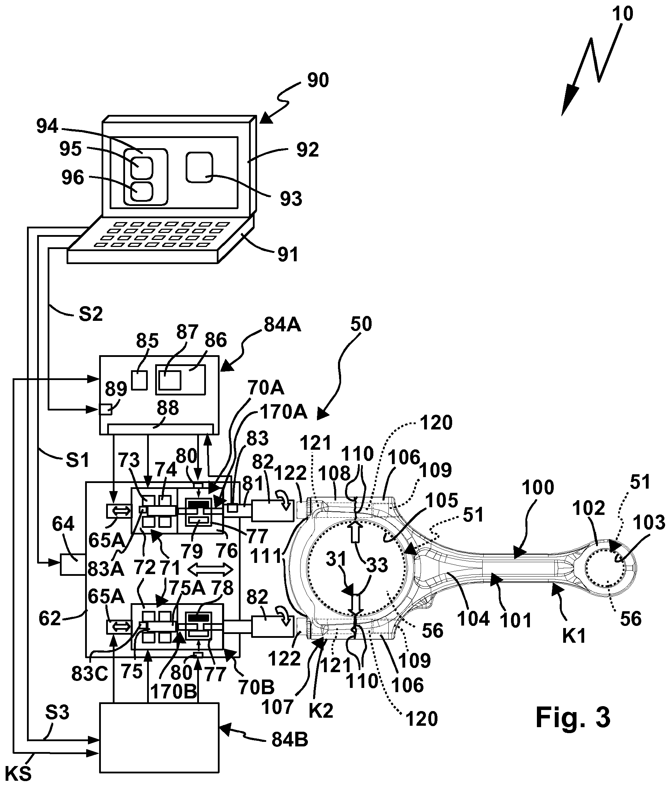

Wenn ein jeweiliges Motorbauteil 100 an der Kerbstation 30 mit Laserkerben versehen ist, beispielsweise von der Innenseite der Lageröffnung 105 her, was mit Pfeilen in Figur 3 als ein Kerbvorgang 33 schematisch dargestellt ist, wird das Motorbauteil 100 von der Fördereinrichtung 11 zur Bruchtrennstation 40 weiter vorgefördert. Dort ist eine Bruchtrennvorrichtung 41 angeordnet, die beispielsweise Spreizelemente 42, 43 aufweist, die durch ein Verdrängerelement 44 voneinander weg mit Kraft beaufschlagbar sind. Das Verdrängerelement 44 ist beispielsweise ein sogenannter Spaltkeil, der senkrecht zur Zeichenebene zwischen die Spreizelemente 42, 43 eingebracht wird, um diese voneinander weg zu verdrängen. Dadurch wird der Pleueldeckel 107 vom Pleuelfuß 101 oder werden die Motorbauteil-Komponenten K1, K2 voneinander weg mit Kraft beaufschlagt, also getrennt. Es entstehen zwischen dem Pleuelfuß 101 und dem Pleueldecke 107 zwischen jedem der Seitenarme 106, 108 Bruchtrennflächen 110, die ein zufälliges Muster, welches sich durch den Bruchtrennvorgang ergibt, aufweisen. Mithin passen also Pleueldeckel 107 und Pleuelfuß 101 formschlüssig im Bereich der Bruchtrennflächen 110 zueinander, was eine genaue Passung ermöglicht und insbesondere die Präzision und Genauigkeit der Lageröffnung 103 in an sich bekannter Weise ermöglicht.

Sodann sind die voneinander grundsätzlich getrennten Motorbauteil-Komponenten K1, K2 zwar noch in einer jeweiligen Werkstückhalterung 16 aufgenommen, so dass die zueinander passenden Paarungen von Pleuelfuß 101 und Pleueldeckel 107 räumlich sozusagen zusammenbleiben. Allerdings sind die beiden Komponenten K1, K2 noch voneinander getrennt und müssen durch Schrauben 120 miteinander verbunden werden, was an der Schraubstation 50 geschieht. Dorthin werden die voneinander bruchgetrennten Motorbauteil-Komponenten K1, K2 von der Fördereinrichtung 11 vorgefördert.

An Schraubstation 50 finden mehrere Schraubvorgänge und Weiterbearbeitungsvorgänge an dem jeweiligen Motorbauteil 100 statt, ohne dass das Motorbauteil 100 die Schraubstation 50 sozusagen verlassen muss, d.h. ohne dass weitere Bearbeitungsstationen bei der Bearbeitungsmaschine 9 nötig sind.

An der Schraubstation 50 ist eine Fixiereinrichtung 51 vorgesehen, mit der das Motorbauteil 100 bezüglich der Schraubvorrichtung 10 derart fixierbar ist, dass der Einschraubvorgang und die nachfolgend noch beschriebenen Bearbeitungsvorgänge möglich sind. Die Fixiereinrichtung 51 umfasst beispielsweise einen Führungsträger 52, insbesondere eine Art Ständer, ein Portal oder dergleichen, an der eine Linearführung oder sonstige Führung 53 für einen Schlitten 54 angeordnet ist. Der Schlitten 54 kann entlang einer Fixierachse N bewegt werden zwischen einer in gestrichelten Linien dargestellten Fixierstellung, bei der Fixierkörper 56, beispielsweise Fixiervorsprünge, in die Lageröffnungen 103, 105 des Motorbauteils 100 eingreifen und dieses somit zentrieren. An dem Schlitten 54 ist ein Niederhalter 55 angeordnet, der in der Fixierposition der Fixiereinrichtung 51 dem das Motorbauteil 100 stützenden Haltearm 14 gegenüberliegt, so dass das Motorbauteil 100 sandwichartig zwischen dem Haltearm 14 der Fördereinrichtung 11 und dem Niederhalter 55 gehalten ist. Vorzugsweise sind die Fixierkörper 56 am Niederhalter 55 angeordnet, so dass sie in einem Bewegungsvorgang der Fixiereinrichtung 51 in Eingriff mit den Lageröffnungen 103, 105 gebracht werden können. Die Fixiereinrichtung 51 weist einen Antrieb 57 zum Verstellen der Fixiereinrichtung 51 zwischen der Fixierstellung und der Lösestellung oder Freigabestellung. In der Fixierstellung ist das Motorbauteil 100 bezüglich der nachfolgend noch beschriebenen Schraubmaschinen 70A, 70B ortsfest fixiert, beispielsweise in der Werkstückhalterung 16 verspannt, während in der Lösestellung ein Weiterfördern des Motorbauteils 100 aus der Schraubstation 50 heraus, z.B. zur Ladestation 20, möglich ist.

Die Schraubvorrichtung 10 weist Schraubmaschinen 70A, 70B auf, die zum Einschrauben der Schrauben 120 vorgesehen ist. Die Schraubmaschinen 70 sind paarweise vorhanden, so dass simultan beide Schrauben 120 in das Motorbauteil 100 einschraubbar oder zumindest teilweise auch wieder heraus schraubbar sind. In der nachfolgenden Beschreibung sind die Schraubmaschinen 70A, 70B teilweise auch nur als Schraubmaschine 70 bezeichnet, weil beide Schraubmaschinen 70A, 70B baugleich sind.

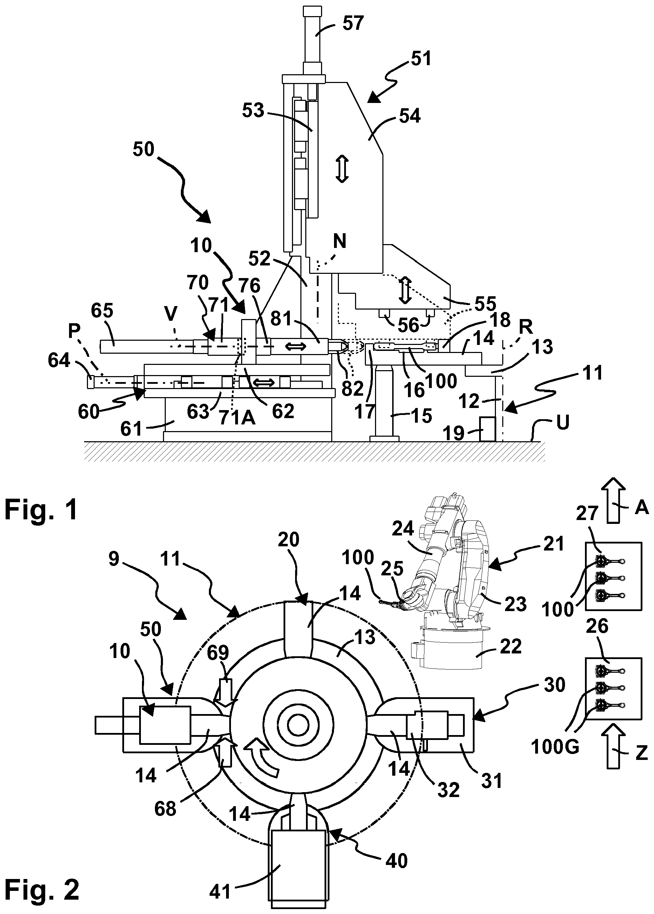

Die Schraubmaschinen 70A, 70B sind anhand einer Positioniereinrichtung 60 bezüglich der Werkstückhalterung 60 positionierbar. In einer Bearbeitungsstellung, die in Figur 1 gestrichelt dargestellt ist, sind die Schraubmaschinen 70A, 70B zu dem Motorbauteil 100 und/oder der Werkstückhalterung 16 hin verstellt, so dass die Schraubmaschinen 70 in Eingriff mit den Schrauben 120 gelangen können oder in Eingriff sind, während in einer Warteposition oder Freigabeposition, die in Figur 1 mit durchgezogenen Linien dargestellt ist, die Schraubmaschinen 70A, 70B von dem Motorbauteil 100 und/oder der Werkstückhalterung 16 weg verstellt sind.

Die Positioniereinrichtung 60 weist ein eine Maschinenbasis 61, zum Beispiel ein sogenanntes Bett oder Grundgestell, zum Abstellen auf dem Untergrund U auf, an der ein Schraubmaschinenträger 62 beweglich, vorliegend linearbeweglich, gelagert ist. Selbstverständlich wäre eine Drehbeweglichkeit oder eine kombinierte Linear- und Drehbeweglichkeit ohne weiteres möglich. Der Schraubmaschinenträger 62 ist als Schlitten ausgestaltet. Der Schraubmaschinenträger 62 ist an einer Führung 63, der Maschinenbasis 61 linear verstellbar, beispielsweise entlang einer Positionierachse P. Ein Positionierantrieb 64 treibt den Schraubmaschinenträger 62 zur Positionierbewegung zwischen der Warteposition oder Freigabeposition und der Arbeitsposition, bei der das Einschrauben der Schrauben 120 möglich ist, an. Mithin sind also beide Schraubmaschinen 70A, 70B an einem gemeinsamen Schraubmaschinenträger 62 angeordnet, so dass sie simultan zwischen der Warteposition und der Arbeitsposition verstellbar sind.

Jede Schraubmaschine 70A, 70B wiederum ist mit einem Vorschubantrieb 65 zum individuellen Vorschieben eines Schraubwerkzeugs 82 einer jeweiligen Schraubmaschine 70 während eines Einschraubens der jeweiligen Schrauben 120 in die Motorbauteilkomponenten K1, K2 ausgestattet. Mithin folgt also das Schraubwerkzeug 82 der Einschraubbewegung bzw. Linearverstellung der jeweiligen Schraube 120. Anhand des Vorschubantriebs 65 kann das Schraubwerkzeug 82 entlang einer Vorschubachse V, die der Längsachse der Schraube 120 oder der Längsachse der Schraubaufnahmen 109 entspricht, linear verstellt werden.

Die Schraubmaschinen 70A, 70B weisen Antriebsstränge 170A, 170B auf, die baugleich sind. Nachfolgend wird nur einer der Antriebsstränge 170A, 170B beschrieben, der auch als Antriebsstrang 170 bezeichnet wird.

Der Antriebsstrang 170 weist einen Antriebsmotor 71 auf, beispielsweise einen Elektromotor. Der Antriebsmotor 71 hat einen Stator 72 mit Erregerwicklungen 73, 74, die unabhängig voneinander bestrombar sind. Die Erregerwicklungen 73, 74 können auch dadurch gebildet sein, dass eine einzige Erregerwicklung vorgesehen ist, die jedoch einen Zwischenabgriff aufweist, so dass beispielsweise die volle Erregerwicklung oder nur ein Teil davon bestrombar ist.

Der Stator 92 lagert einen Rotor 75 drehbar, d.h. der jeweilige Antriebsmotor 71 ist ein Drehantrieb. Der Rotor 75 weist einen Motor-Abtrieb 75A auf, an dem in einer in der Zeichnung nicht dargestellten Variante unmittelbar das Schraubwerkzeug 82 angeordnet sein kann. Es ist auch möglich, dass der Motorabtrieb 75A ein nicht schaltbares Getriebe, jedoch vorzugsweise ein Untersetzungsgetriebe, antreibt, welches anstelle oder in Ergänzung des nachfolgend beschriebenen Schaltgetriebes 76 vorgesehen sein kann.

Das Schaltgetriebe 76 ist vorliegend ein Zweiganggetriebe, wobei ein Mehrganggetriebe, also ein Dreiganggetriebe oder Vierganggetriebe, ohne weiteres möglich ist. Das Schaltgetriebe 76 hat ein Schaltgetriebeteil 77, das zwischen einer ersten Getriebestufe 78 und einer zweiten Getriebestufe 79 schaltbar ist, wobei das Drehmoment in der zweiten Getriebestufe 79 größer als in der ersten Getriebestufe 78 ist, jedoch die Drehzahl an einem Abtrieb 81 des Schaltgetriebes 76 sich gerade umgekehrt verhält, d.h. die Maximaldrehzahl des Antriebsstrangs 170 ist in der ersten Getriebestufe 78 größer als in der zweiten Getriebestufe 79.

Die Getriebestufen 78, 79 sind lediglich schematisch angedeutet. Beispielsweise kann es sich um Planetenstufen oder dergleichen handeln. Möglich ist beispielsweise, dass ein Planetengetriebe mit einem Hohlrad vorgesehen ist, welches in der Getriebestufe 78 freigegeben ist, in der Getriebestufe 79 jedoch bezüglich eines Getriebegehäuses des Schaltgetriebes 76 ortsfest festgelegt ist. Zur Betätigung des Schaltgetriebeteils 77 ist ein Stellantrieb 80 vorgesehen, beispielsweise ein elektrischer Antrieb, insbesondere ein Drehantrieb, ein Linearantrieb, ein Elektromagnet oder dergleichen. Das Schaltgetriebe 76 kann eine weitere, nicht schaltbare Getriebestufe aufweisen, beispielsweise eine Drehzahl-reduzierende Stufe.

Nun kommt es bei der Bearbeitung von Motorbauteilen 100 auf eine hohe Präzision an. Insbesondere sind die Motorbauteile 100 für einen Dauerbetrieb ausgelegt, d.h. beispielsweise bei einer Brennkraftmaschine für mehrere 100.000 km Laufleistung eines Motors, in dem die Motorbauteile 100 verwendet sind, so dass es auf eine hohe Präzision ankommt. Dementsprechend ist ein Drehmomentsensor 83 beim jeweiligen Antriebsstrang 170 vorgesehen, mit dem ein Anzugsdrehmoment beim Einschrauben einer jeweiligen Schraube 120 messbar ist. Des Weiteren ist ein Drehzahlsensor 83A vorgesehen, mit dem die Drehzahl am Abtrieb 81 des Antriebsstrangs 170 messbar ist. Ohne weiteres könnte die Drehzahl aber auch beispielsweise direkt am Stator 72, insbesondere bei einer Bestromungseinrichtung für den Stator 72, ermittelt werden, wenn zudem noch bekannt ist, welche der beiden Getriebestufen 78 oder 79 geschaltet ist.

Zur präzisen Ansteuerung eines jeweiligen Antriebsstrangs 170 ist jeweils eine Schraubmaschinensteuerung 84A, 84B vorgesehen, wobei beide Schraubmaschinen-Steuerungseinrichtungen 84 baugleich sind. Die Schraubmaschinen-Steuerungseinrichtung 84 weist einen Prozessor 85, der mit einem Speicher 86 kommuniziert, auf, wobei am Speicher 86 ein Programm 87 oder mehrere Programme 87 gespeichert sind, deren Programmcode vom Prozessor 85 ausführbar ist. Die Schraubmaschinen-Steuerungseinrichtung 84A, 84B weist eine Schnittstelle 88 zur jeweiligen Schraubmaschine 70A, 70B auf, beispielsweise eine digitale und/oder analoge Schnittstelle, mit der Steuerbefehle von der Schraubmaschinen-Steuerungseinrichtung 84 an die jeweilige Schraubmaschine 70A, 70B gesendet werden können und/oder Meldungen, beispielsweise der Sensoren 83, 83A, erfasst werden können. Eine beispielsweise leistungselektronische Bestromungseinrichtung für einen jeweiligen Antriebsmotor 71 ist in der Zeichnung nicht dargestellt, kann aber beispielsweise durch die Schraubmaschinen-Steuerungseinrichtung 84 angesteuert werden.

Die Schraubmaschinen-Steuerungseinrichtung 84 kann also sozusagen autark oder lokal den Einschraubvorgang einer Schraube 120 überwachen und steuern, ist jedoch in ein größeres Steuerungskonzept eingebunden und weist eine Schnittstelle 89 für eine Steuerungseinrichtung 90 der Bearbeitungsmaschine 9 auf.

Die Steuerungseinrichtung 90 weist Eingabemittel 91 sowie Ausgabemittel 92, beispielsweise Tastatur und Monitor, sowie einen Prozessor 93 zur Ausführung von Befehlen von Steuerungsprogrammen 95 und 96 auf, die in einem Speicher 94 der Steuerungseinrichtung 90 gespeichert sind. Selbstverständlich können auch die Schraubmaschinen-Steuerungseinrichtung 84 Eingabemittel und Ausgabemittel in der Art der Steuerungseinrichtung 90 aufweisen, so dass lokale Befehle, Parameter und dergleichen eingebbar und/oder lokale Meldungen der Schraubmaschine 70A, 70B ausgebbar sind, z.B. Störungen, Funktionsmeldungen und dergleichen.

Das Steuerungsprogramm 95 dient beispielsweise dazu, den Rundschalttisch bzw. die Förderungseinrichtung 11 anzusteuern. Weiterhin kann auch die Förderungseinrichtung 21 über das Steuerprogramm 95 angesteuert werden. Mithin steuert also das Steuerprogramm 95 beispielsweise sämtliche zentralen Funktionen der Bearbeitungsmaschine 9, z.B. ein taktgenaues Arbeiten der Fördereinrichtungen 11, 21, der Kerbeinrichtung 31, der Bruchtrennvorrichtung 41 sowie der Schraubstation 50. So kann beispielsweise vorgesehen sein, dass das Steuerprogramm 95 den Positionierantrieb 65 der Positioniereinrichtung 60 ansteuert, oder auch den Antrieb 57 der Fixiereinrichtung 51. Des Weiteren kommuniziert die sozusagen zentrale Steuerungseinrichtung 90, insbesondere deren Steuerungsprogramm 95, mit einem Antrieb 19 zum Antreiben der Fördereinrichtung 11.

Die Steuereinrichtung 90 könnte auch weiterhin unmittelbar die jeweiligen Schraubmaschinen 70A, 70B ansteuern, wobei vorliegend das Konzept realisiert ist, dass jede Schraubmaschine 70 eine eigene sozusagen lokale Schraubmaschinen-Steuerungseinrichtung 84 aufweist. Diese wird vom Steuerprogramm 96 beispielsweise dazu angesteuert, die jeweilige Schraube 120 einzuschrauben oder auszuschrauben, wobei dazu die mehrfache Verstellbarkeit der Schraubmaschinen 70 dahingehend, dass an dem Abtrieb 81 einmal ein hohes Drehmoment bei gleichzeitig niedriger Drehzahl, ein anderes Mal jedoch eine hohe Drehzahl bei kleinerem Drehmoment zur Verfügung gestellt wird.

Es ist möglich, dass die Steuerungseinrichtung 90 die Schraubmaschinen-Steuerungseinrichtungen 84A, 84B zentral ansteuert, sodass beispielsweise die Vorschubgeschwindigkeit der Vorschubantriebe 65 und/oder das Drehmoment und/oder die Drehzahl eines jeweiligen Antriebs 71 der Schraubmaschinen 70A, 70B individuell zu einem synchronisierten Einschrauben der Schrauben 120 angesteuert wird. Es ist aber auch möglich, dass die Schraubmaschinen-Steuerungseinrichtungen 84A, 84B beispielsweise über eine Kommunikationsverbindung KS die Einschrauben Vorgänge untereinander sozusagen abstimmen oder synchronisieren.

Die Steuerungseinrichtungen 90, 84 können drahtgebunden oder leitungsgebunden, aber auch drahtlos mit den zu steuernden oder zu überwachenden Komponenten, also beispielsweise den Schraubmaschinen 70 oder untereinander kommunizieren. Es können digitale Busse eingesetzt werden, beispielsweise im industriellen Umfeld übliche Busse, z.B. Profibus oder dergleichen eingesetzt werden. Exemplarisch sind Steuerverbindungen S1 von der Steuerungseinrichtung 90 zu dem Positionierantrieb 64 sowie S2 und S3 zu den Steuerungseinrichtungen 84A, 84B eingezeichnet. Selbstverständlich sind weitere Steuerungsverbindungen und/oder Überwachungsverbindungen zu den anderen zu steuernden und zu überwachenden Komponenten, zwischen der Steuerungseinrichtung 90 und beispielsweise dem Antrieb 57, 19, der Kerbeinrichtung 31 und dergleichen vorgesehen und vorhanden.

Nun werden an der Schraubstation 50 die Schrauben 120 nicht nur eingeschraubt, sondern es werden auch die Bruchtrennflächen 110 gereinigt. Zu diesem Zweck sind beispielsweise eine Ausblaseinrichtung 68 und/oder eine Vibrationseinrichtung 69 vorgesehen. Damit die Bruchtrennflächen 110 voneinander weg bewegt sind, beispielsweise um eine Distanz D2.

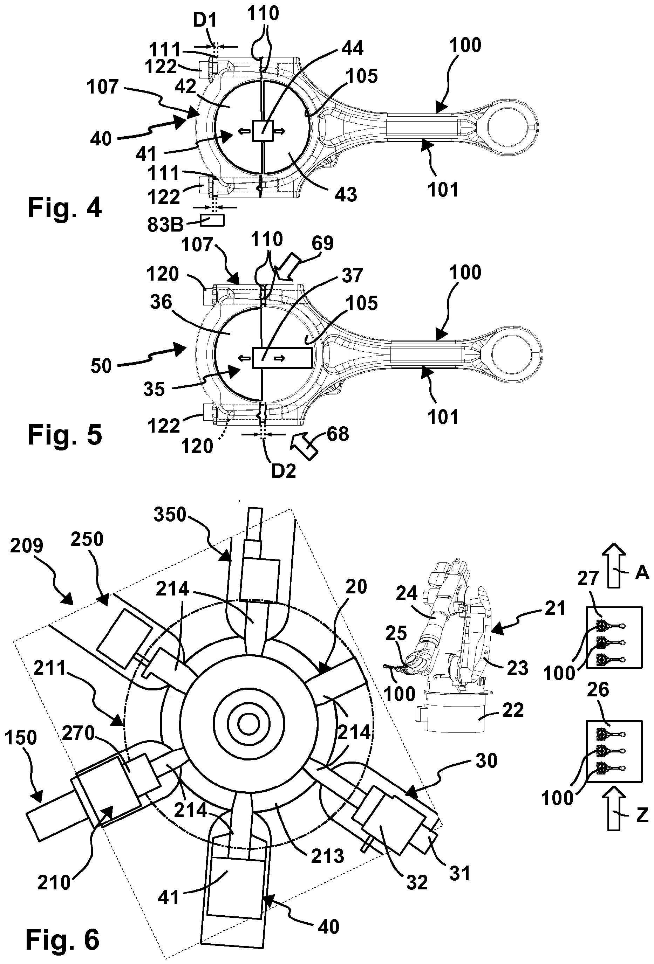

Damit die Ausblaseinrichtung 68 und/oder die Vibrationseinrichtung 69 effektiv arbeiten können, ist eine Löseeinrichtung 35 vorgesehen. Die Löseeinrichtung 35, beispielsweise eine Hebelanordnung oder dergleichen, greift in die Lageröffnung 109 der beiden voneinander bruchgetrennten Komponenten K1, K2 ein, um diese voneinander weg zu bewegen. Das ist in Figur 5 schematisch dargestellt. Beispielsweise stützt sich ein Stützglied 36 in der Lageröffnung 103 ab, welches von einem Betätigungskörper 37, der sich ebenfalls in der Lageröffnung 103 oder einer sonstigen ortsfesten Stelle, beispielsweise der Fördereinrichtung 11, abstützt, angetrieben wird, um den Pleueldeckel 107 vom Pleuelfuß 101 weg zu bewegen. Dazu sind die Schrauben 120 um eine Distanz D1 gelöst, so dass die Bruchtrennflächen 110 um die gleiche Distanz D1 oder eine evtl. kleinere Distanz D2 voneinander weg bewegbar sind, nämlich durch die Löseeinrichtung 35.

An dieser Stelle sei bemerkt, dass auch durch die Vibrationseinrichtung 69, die beispielsweise gegen das Motorbauteil 110 und/oder die Werkstückhalterung 16 klopft oder diese in sonstiger Weise in Schwingungen verstellt wird, der Pleueldeckel 107 und vom Pleuelfuß 101 und mithin also die Motorbauteil-Komponente K2 von der Motorbauteil-Komponente K1, entfernbar ist, um einen Spalt oder Zwischenraum zwischen den Bruchtrennflächen 110 bereitzustellen.

An der Schraubstation 50 werden also die Schrauben 120 zunächst in die Schraubaufnahmen 109 eingedreht, so dass die Bruchtrennflächen 110 fest aufeinander zu liegen kommen und evtl. nur teilweise angelöste Vorsprünge an den Bruchtrennflächen 110 dadurch sozusagen mit Druck belastet werden, wodurch sie beispielsweise vom Bodenbereich der jeweiligen Bruchtrennfläche 110 abbrechen oder in eine solche Lage gelangen, dass die Bruchtrennflächen 110 nicht aufeinander zu liegen kommen, so dass beispielsweise die Motorbauteil-Komponenten K1, K2 nicht exakt aneinander angefügt sind. Dementsprechend werden die Schrauben 120 dann wieder zumindest teilweise gelöst, so dass ein Abstand zwischen den Bruchtrennflächen 110 herstellbar ist, nämlich beispielsweise der Abstand D2 entsprechend Figur 5, und anhand der Ausblaseinrichtung 68 und/oder der Vibrationseinrichtung 69 die störenden Partikel von den Bruchtrennflächen 110 entfernt werden, so dass die Bruchtrennflächen 110 sozusagen sauber sind. In einem anschließenden Schraubvorgang werden die Schrauben 120 dann von den Schraubmaschinen 70 fest angezogen, so dass die Komponenten K1 und K2 fest miteinander verbunden sind.

Man erkennt also, dass eine Vielzahl von Arbeitsgängen an der Schraubmaschine 50 notwendig ist. Damit diese sozusagen im Takt mit den Bearbeitungsschritten an der Ladestation 20, der Kerbstation 30 und der Bruchtrennstation 40 bleibt, müssen die Schraubmaschinen 70 effektiv und schnell arbeiten. Das wird nachfolgend deutlich:
Zum sozusagen ersten Einschrauben der Schrauben 120 in die Schraubaufnahmen 109 werden die Schraubmaschinen 70A, 70B von den Schraubmaschinen-Steuerungseinrichtungen 84A, 84B in einem ersten, sozusagen schnellen Betriebsmodus angesteuert. In diesem werden beispielsweise nur die Erregerwicklungen 73, nicht jedoch die Erregerwicklungen 74 angesteuert. Dementsprechende Ausgabebefehle werden von der Steuerungseinrichtung 84 beispielsweise an der Schnittstelle 88 an die Erregerwicklungen 73 ausgegeben. Die Schnittstelle 88 kann beispielsweise eine Bestromungseinrichtung für die Erregerwicklungen 73, 74 sein.

Alternativ oder ergänzend steuert die Steuereinrichtung 84 beispielsweise die Stellantriebe 80 der Schaltgetriebe 76 so an, dass für den ersten Schraubvorgang, d.h. für das erstmalige Anschrauben der Schrauben 120, ein schneller Gang eingestellt ist, nämlich die Getriebestufe 78. Dann ist zwar das Drehmoment am Abtrieb 81 klein, jedoch die maximal erzielbare Geschwindigkeit hoch. Somit schrauben also die Schraubmaschinen 70 im sozusagen ersten Gang oder Schnellbetriebmodus die Schrauben 120 erstmalig in die Motorbauteil-Komponenten K1, K2 ein, so dass die Köpfe 122 in den Kopf-Anlageflächen 111 zu liegen kommen.

In einem nächsten Bearbeitungsschritt steuert die Schraubmaschine die Steuerungseinrichtung 84 die Schraubmaschinen 70A, 70B zu einem partiellen Lösen der Schrauben 120 an, so dass die Schraubenköpfe 122 beispielsweise den Abstand D1 zu den Kopf-Anlageflächen 111 haben. Dies kann beispielsweise dadurch geschehen, dass die Schraubmaschinen 70A, 70B die Schrauben 120 um eine vorbestimmte Anzahl von Umdrehungen aus den Schraubaufnahmen 109 ausdrehen. Die Schraubmaschinen-Steuerungseinrichtung 84A, 84B kann dazu beispielsweise die Signale des Drehzahlsensors 83A auswerten. Alternativ oder ergänzend ist aber auch ein Abstandssensor 83B möglich, mit dem beispielsweise auf optischem Wege oder dergleichen der Abstand D1 messbar ist. Der Abstandsensor 83B ist beispielsweise über eine nicht dargestellte Leitungsverbindung, per Funk oder dergleichen mit der Steuerungseinrichtung 84 verbunden.

Während die Ausblaseinrichtung 68 und/oder die Vibrationseinrichtung 69 die Bruchtrennflächen 110 reinigen, können die Schraubmaschinen 70A, 70B still stehen. In diesem Zustand schaltet beispielsweise die jeweilige Steuerungseinrichtung 84A, 84B die Schraubmaschine 70A, 70B von dem ersten Betriebsmodus in den zweiten Betriebsmodus, d.h. zu einem Betriebsmodus, in welchem das Drehmoment am Schraubwerkzeug 82 bzw. Abtrieb 81 groß, die maximal erzielbare Drehzahl klein ist. Die Schrauben 120 sind nämlich schon weitgehend in die Schraubaufnahmen 109 eingedreht, so dass ein schneller Betrieb bzw. schneller Schraubvorgang nicht notwendig ist. Wenn nämlich dann die Bruchtrennflächen 110 gereinigt sind, können die Schraubmaschinen 70 die Schrauben 120 mit wenigen Umdrehungen, dafür aber mit großer Kraft bzw. großem Drehmoment fest anziehen, so dass die Köpfe 122 fest an mit den Kopf-Anlageflächen 111 verspannt und somit auch der Pleueldeckel 107 mit dem Pleuelfuß 101 fest verbunden ist. Anhand des Drehmomentsensors 83 kann die Steuerungseinrichtung 84 dann die jeweilige Schraubmaschine 70 bei erreichtem Drehmoment und somit fest angezogener Schraube 120 abschalten.

Vorteilhaft ist es weiterhin, wenn die Schraubvorrichtung zu einem sogenannten überelastischen Anziehen von Schrauben ausgestaltet ist. Dabei kann beispielsweise vorgesehen sein, dass die Schrauben 120 so weit angezogen werden, dass die Köpfe 122 fest an den Kopf-Anlageflächen 111 anliegen. Dabei ist eine Drehmomentüberwachung, eine Anlagesensoren oder dergleichen wie beschrieben vorteilhaft. Dann sind die Schrauben zwar schon fest angeschraubt, jedoch nicht überelastisch angezogen. Anhand eines Drehwinkelsensors 83C ist es beispielsweise möglich, dass die Steuerungseinrichtung 84 eine jeweilige Schraubmaschine 70A, 70B derart ansteuert, dass sie die jeweilige Schraube 120 um einen vorbestimmten Drehwinkel anschraubt, nachdem ihr Kopf 122 fest an der Kopf-Anlage 122 anliegt. Beispielsweise kann eine weitere Schraubbewegung um eine halbe Umdrehung, aber auch um mehr als eine Umdrehung, oder dergleichen vorgesehen sein. Der Drehwinkelsensor 83C kann beispielsweise einen Bestandteil des Antriebsmotors 71 bilden, z.B. ein Lagesensor oder Drehwinkelsensor zur Erfassung einer Drehwinkelstellung des Rotors 75 relativ zum Stator 72 sein.

Anstelle des Umschaltens von der Getriebestufe 78 auf die Getriebestufe 79 oder ergänzend dazu kann die Steuerungseinrichtung 84 aber auch beispielsweise für den zweiten Betriebsmodus die Erregerwicklungen 74 dazu schalten, so dass der Antriebsmotor 71 an seinem Motor-Abtrieb 75A ein höheres Drehmoment abgibt.

Zum Schalten zwischen den Getriebestufen 78 und 79 kann eine Kupplung 71A vorgesehen sein, beispielsweise zwischen dem Motor-Abtrieb 75A und dem Antrieb bzw. Eingang des Schaltgetriebes 76, die während des Schaltvorgangs den Antriebsmotor 71 vom Schaltgetriebe 76 abkuppelt.

Der Unterschied zum Stand der Technik wird anhand von Figur 6 deutlich, welche eine beispielsweise konventionelle Bearbeitungsmaschine 209 zeigt. Die Bearbeitungsmaschine 209 weist teilweise gleiche oder ähnliche Komponenten wie die Bearbeitungsmaschine 9 auf, die mit den gleichen Bezugszeichen versehen sind. Dementsprechend ist eine Ladestation 20 vorgesehen, die zum Entladen und Beladen einer Fördereinrichtung 211, insbesondere einem Rundtisch, der Bearbeitungsmaschine 109 dient. Die Fördereinrichtung 211 weist einen Träger 213 auf, beispielsweise einen Tisch in der Art des Trägers 13, von dem Haltearme 214 abstehen. Jeder Bearbeitungsstation der Bearbeitungsmaschine 209 ist jeweils ein Haltearm 214 zugeordnet. Dementsprechend kann beispielsweise der Rundtisch oder die Fördereinrichtung 211 nach dem Beladen eines jeweiligen Haltearms 214 mit einem Motorbauteil 100 um eine Station weitergedreht werden, so dass das noch unbearbeitete Motorbauteil 100 zur Kerbeinrichtung 31, also der Kerbstation 30 gefördert wird, anschließend zur Bruchtrennstation 40 mit der Bruchtrennvorrichtung 41 und schließlich zu einer ersten Schraubstation 150, wo beispielsweise das erste Anziehen der Schrauben 120 anhand einer eine oder mehrere Schraubmaschinen 270 aufweisenden Schraubvorrichtung 210 stattfindet. Beispielsweise sind die Schraubmaschinen 270 für eine hohe Drehzahl, jedoch ein kleines Drehmoment ausgelegt, so dass die Schrauben 120 zwar schnell, jedoch mit geringer Kraft andrehen können.

Sodann wird das Motorbauteil 100 in eine Schraubstation 250 weitergefördert, wo die Schrauben 120 wieder teilweise gelöst werden, so dass die Bruchtrennflächen 110 voneinander weg bewegbar sind (vergleichbar mit Figur 5), um anhand der Ausblaseinrichtung 68 und/oder der Vibrationseinrichtung 69 gereinigt zu werden. In der Schraubstation 250 werden dann die Schrauben 120 wieder angezogen, wofür diese in der Zeichnung nicht dargestellte Schraubmaschinen aufweist.

Dann werden die Motorbauteile 100 zur abschließenden Schraubstation 350 weitergefördert, wo die Schrauben 120 anhand nicht dargestellter Schraubmaschinen mit kleiner Geschwindigkeit, jedoch hohem Drehmoment fest angezogen werden. Man erkennt also, dass für einen Arbeitsprozess, der bei der Bearbeitungsmaschine 9 mit einer einzigen Schraubmaschine 50 möglich ist, zur Gewährleistung schneller Taktzeiten insgesamt drei Schraubstationen bei der Bearbeitungsmaschine 209 notwendig sind. Sowohl der Platzbedarf ist erheblich, also auch der maschinelle Aufwand. Es sind nämlich für jede der Schraubstationen 150, 250 und 350 Positioniereinrichtungen in der Art der Positioniereinrichtung 60, Fixiereinrichtungen in der Art Fixiereinrichtung 51 und dergleichen andere mechanische Maßnahmen notwendig. Zudem sind jeweilige Schraubmaschinen-Steuerungseinrichtungen vorzusehen, d.h. auch der Steuerungsaufwand einschließlich der verlegenden Leitungen beispielsweise zur überlagerten oder zentralen Steuerungseinrichtung 90 steigt erheblich an.

## Patentansprüche

1. Schraubvorrichtung zur Verbindung zweier aus einem Motorbauteil-Grundkörper (100G) anhand einer Bruchtrennung hergestellter oder herzustellender Motorbauteil-Komponenten (K1, K2), insbesondere eines Pleuelfußes (101) und eines Pleueldeckels (107), eines Motorbauteils (100) anhand mindestens einer Schraube (120), wobei die Schraubvorrichtung (10) eine Werkstückhalterung (16) zum Halten mindestens einer der Motorbauteil-Komponenten (K1, K2) sowie eine Schraubmaschine (70) zu einem Schrauben der mindestens einen Schraube (120) in die Motorbauteil-Komponenten (K1, K2) aufweist, wobei die Schraubmaschine (70) einen Antriebsstrang (170) mit einem insbesondere elektrischen Antriebsmotor (71) zum Antreiben eines Schraubwerkzeugs (82) aufweist, welches an einem Abtrieb (81) des Antriebsstrangs (170) angeordnet oder anordenbar ist, **dadurch gekennzeichnet, dass** die Schraubmaschine (70) zwischen einem ersten Betriebsmodus und einem zweiten Betriebsmodus schaltbar ist, wobei der Antriebsstrang (170) in dem ersten Betriebsmodus eine höhere maximale Drehzahl und ein kleineres maximales Drehmoment als in dem zweiten Betriebsmodus an seinem Abtrieb (81) aufweist.

2. Schraubvorrichtung nach Anspruch 1, **dadurch gekennzeichnet, dass** die Schraubmaschine (70) zur Bereitstellung des ersten Betriebsmodus und des zweiten Betriebsmodus ein zwischen einem ersten Übersetzungsverhältnis und einem zweiten Übersetzungsverhältnis schaltbares Schaltgetriebe (76) zwischen dem Antriebsmotor (71) und dem Abtrieb (81) aufweist, wobei eine Drehzahl des Abtriebs (81) bei gleicher Drehzahl des Antriebsmotors (71) in dem ersten Übersetzungsverhältnis größer als in dem zweiten Übersetzungsverhältnis ist, wobei vorteilhaft vorgesehen ist, dass die Schraubmaschine (70) eine Kupplung, insbesondere eine Klauenkupplung, zum Auskuppeln des Schaltgetriebes von dem Antriebsmotor (71) der Schraubmaschine (70) für ein Schalten zwischen dem ersten Übersetzungsverhältnis und dem zweiten Übersetzungsverhältnis aufweist.

3. Schraubvorrichtung nach einem der vorhergehenden Ansprüche, **dadurch gekennzeichnet, dass** der Antriebsmotor (71) zur Bereitstellung des ersten Betriebsmodus und des zweiten Betriebsmodus zwischen einem ersten elektrischen Betriebsmodus und einem zweiten elektrischen Betriebsmodus ausgestaltet ist und in dem ersten Betriebsmodus eine höhere maximale Drehzahl an seinem Motor-Abtrieb (75A) als in dem zweiten Betriebsmodus aufweist und/oder dass der Antriebsmotor (71) eine erste Anordnung von Erregerwicklungen (73) und eine zweite Anordnung von Erregerwicklungen (74), die, insbesondere zur Bereitstellung des ersten Betriebsmodus und des zweiten Betriebsmodus, selektiv bestrombar und/oder wahlweise seriell oder parallel bestrombar sind und/oder dass der Antriebsmotor (71) eine Einrichtung zur Schwächung seines elektrischen Erregerfeldes aufweist.

4. Schraubvorrichtung nach einem der vorhergehenden Ansprüche, **dadurch gekennzeichnet, dass** sie zu einem Schrauben der mindestens eine Schraube (120) in eine erste Schraubposition, in der die mindestens eine Schraube (120) eine Beweglichkeit der Motorbauteil-Komponenten (K1, K2) für einen im Zusammenhang mit der Bruchtrennung der Motorbauteil-Komponenten (K1, K2) stehenden Bearbeitungsschritt ermöglicht, und in eine zweite Schraubposition ausgestaltet ist, bei der die Motorbauteil-Komponenten (K1, K2) durch die mindestens eine Schraube (120) fest aneinander gehalten sind.

5. Schraubvorrichtung nach Anspruch 4, **dadurch gekennzeichnet, dass** der erste Betriebsmodus dem Schrauben der mindestens eine Schraube (120) in die erste Schraubposition und der zweite Betriebsmodus dem Schrauben der mindestens eine Schraube (120) in die zweite Schraubposition zugeordnet sind und/oder dass die Schraubvorrichtung die Schraubmaschine (70) mit dem zweiten Betriebsmodus zum Schrauben der mindestens einen Schraube (120) in die erste Schraubposition betreibt, wenn die mindestens eine Schraube (120) mit dem ersten Betriebsmodus nicht in die erste Schraubposition einschraubbar ist, und/oder dass die Schraubmaschine (70) zu einem Schrauben der mindestens einen Schraube (120) in die erste Schraubposition derart ausgestaltet ist, dass ein Kopf (122) der Schraube (120) von einer zur Anlage des Kopfes (122) vorgesehenen Kopf-Anlagefläche (111) an einer der beiden Motorbauteil-Komponenten (K1, K2), insbesondere des Pleueldeckels (107), einen vorbestimmten Abstand aufweist und/oder dass im aneinander geschraubten Zustand des Motorbauteils aneinander anliegende Bruchtrennflächen (110) der Motorbauteil-Komponenten in einen vorbestimmten, insbesondere zu einer Reinigung der Bruchtrennflächen (110) geeigneten, Arbeitsabstand bringbar sind, wobei vorteilhaft vorgesehen ist, dass die Schraubmaschine (70) zu einem Schrauben der mindestens einen Schraube (120) in eine Anlageposition, bei der der Kopf (122) an der Kopf-Anlagefläche (111) anliegt und zu einem anschließenden Lösen der mindestens einen Schraube (120) derart, dass ihr Kopf (122) von der Kopf-Anlagefläche (111) den vorbestimmten Abstand aufweist und/oder die Bruchtrennflächen (110) in den Arbeitsabstand bringbar sind, ausgestaltet ist.

6. Schraubvorrichtung nach einem der vorhergehenden Ansprüche, **dadurch gekennzeichnet, dass** das maximale Drehmoment in dem zweiten Betriebsmodus doppelt so groß, insbesondere dreimal so groß, besonders bevorzugt viermal so groß wie das maximale Drehmoment in dem ersten Betriebsmodus ist.

7. Schraubvorrichtung nach einem der vorhergehenden Ansprüche, **dadurch gekennzeichnet, dass** die Werkstückhalterung (16) zu einem Halten des Motorbauteil-Grundkörpers (100G) für eine nach dem Schrauben der mindestens einen Schraube (120) in die erste Schraubposition erfolgende Bruchtrennung ausgestaltet ist und/oder dass die Werkstückhalterung (16) einen Freiraum aufweist, durch den bei der Bruchtrennung entstandene Partikel aus dem Bereich von Bruchtrennflächen (110) der Motorbauteil-Komponenten (K1, K2) entfernbar sind, insbesondere anhand eines Vibrationseinrichtung (69) und/oder anhand einer Ausblaseinrichtung (68), wobei vorteilhaft vorgesehen ist, dass die Vibrationseinrichtung (69) und/oder die Ausblaseinrichtung (68) einen Bestandteil der Schraubvorrichtung bilden.

8. Schraubvorrichtung nach einem der vorhergehenden Ansprüche, **dadurch gekennzeichnet, dass** sie eine Bruchtrennvorrichtung (41) zum Bruchtrennen des Motorbauteil-Grundkörpers (100G) aufweist und/oder dass die Schraubvorrichtung zu einem Schalten der Schraubmaschine (70) von dem ersten Betriebsmodus in den zweiten Betriebsmodus während des im Zusammenhang mit der Bruchtrennung der Motorbauteil-Komponenten (K1, K2) stehenden Bearbeitungsschritts ausgestaltet und/oder vorgesehen ist und/oder dass der im Zusammenhang mit der Bruchtrennung der Motorbauteil-Komponenten (K1, K2) stehende Bearbeitungsschritt eine Bruchtrennung des Motorbauteil-Grundkörpers (100G) und/oder eine Entfernung von bei der Bruchtrennung entstandener Partikel aus dem Bereich von Bruchtrennflächen (110) der Motorbauteil-Komponenten (K1, K2), insbesondere eine Vibration mindestens einer Motorbauteil-Komponente (K1, K2) und/oder ein Ausblasen von Partikeln, umfasst oder dadurch gebildet ist.

9. Schraubvorrichtung nach einem der vorhergehenden Ansprüche, **dadurch gekennzeichnet, dass** sie eine Fördereinrichtung (11, 21), insbesondere ein Förderband, einen Roboter, einen Rundschalttisch oder dergleichen, zum Fördern der beiden Motorbauteil-Komponenten (K1, K2) und/oder des Motorbauteil-Grundkörpers (100G) in die Werkstückhalterung (16) hinein und/oder aus der Werkstückhalterung (16) heraus und/oder zum Fördern der die Motorbauteil-Komponenten (K1, K2) oder den Motorbauteil-Grundkörper (100G) haltenden Werkstückhalterung (16) von einer Bearbeitungsstation zu einer anderen Bearbeitungsstation, von denen an einer Bearbeitungsstation die Schraubmaschine (70) angeordnet ist, aufweist.

10. Schraubvorrichtung nach einem der vorhergehenden Ansprüche, **dadurch gekennzeichnet, dass** sie, insbesondere die Werkstückhalterung (16), zu einem Halten der Motorbauteil-Komponenten (K1, K2) und/oder des Motorbauteil-Grundkörpers (100G) in derselben Halteposition für das Schrauben der mindestens einen Schraube (120) mit dem ersten Betriebsmodus der Schraubmaschine (70), insbesondere in die erste Schraubposition, und für das Schrauben der mindestens einen Schraube (120) mit dem zweiten Betriebsmodus, insbesondere in die zweite Schraubposition, ausgestaltet und vorgesehen ist, wobei vorteilhaft vorgesehen ist, dass die Schraubvorrichtung, insbesondere die Werkstückhalterung (16), zu einem Halten der Motorbauteil-Komponenten (K1, K2) und/oder des Motorbauteil-Grundkörpers (100G) in derselben Halteposition für den im Zusammenhang mit der Bruchtrennung stehenden Bearbeitungsschritt ausgestaltet und vorgesehen ist.

11. Schraubvorrichtung nach einem der vorhergehenden Ansprüche, **dadurch gekennzeichnet, dass** die Schraubmaschine (70) eine Schraubmaschinen-Steuerungseinrichtung (84) aufweist, die zur Ansteuerung der Schraubmaschine (70) zum Schrauben der mindestens einen Schraube (120) mit einem vorbestimmten Drehmoment und/oder einer vorbestimmten Drehzahl und/oder mit einem vorbestimmten Drehwinkel und/oder zur Überwachung der Drehzahl und/oder des Drehmoments und/oder des Drehwinkel, mit dem die mindestens eine Schraube in das Motorbauteil (100) durch den Antriebsstrang (170) geschraubt wird, ausgestaltet ist.

12. Schraubvorrichtung nach einem der vorhergehenden Ansprüche, **dadurch gekennzeichnet, dass** die Schraubmaschine (70) mindestens einen Drehmomentsensor (83) zur Erfassung eines Drehmoments, mit dem die Schraubmaschine (70) die mindestens eine Schraube (120) in das Motorbauteil schraubt, und/oder mindestens einen Drehzahlsensor (83A) zur Erfassung einer Drehzahl, mit der die Schraubmaschine (70) die mindestens eine Schraube (120) in das Motorbauteil (100) schraubt, und/oder mindestens einen Drehwinkelsensor (83C) zur Erfassung eines Drehwinkels, mit dem die Schraubmaschine (70) die mindestens eine Schraube (120) in das Motorbauteil (100) schraubt, aufweist und/oder dass die Schraubvorrichtung eine Steuerungseinrichtung (90) zur Synchronisierung eines Schraub-Betriebs der zwischen dem ersten und zweiten Betriebsmodus schaltbaren Schraubmaschine (70) und mindestens einer weiteren Schraubmaschine (70) aufweist, wobei die Schraubmaschinen (70) zum synchronen Einschrauben von Schrauben (120) in das Motorbauteil (100) vorgesehen sind.

13. Schraubvorrichtung nach einem der vorhergehenden Ansprüche, **dadurch gekennzeichnet, dass** sie mindestens zwei, insbesondere zu einem simultanen Einschrauben von Schrauben in die Motorbauteil-Komponenten (K1, K2) ausgestaltete oder vorgesehene, Schraubmaschinen (70) aufweist, die zwischen dem ersten und zweiten Betriebsmodus schaltbar sind, und/oder dass sie mindestens einen Vorschubantrieb (65) zum Vorschieben des Schraubwerkzeugs (82), insbesondere der Schraubmaschine (70), während eines Einschraubens der mindestens einen Schraube (120) in die Motorbauteil-Komponenten (K1, K2) aufweist.

14. Schraubvorrichtung nach einem der vorhergehenden Ansprüche, **dadurch gekennzeichnet, dass** sie eine Positioniereinrichtung zum Positionieren der Schraubmaschine (70), insbesondere zum simultanen Positionieren mindestens zweier Schraubmaschinen (70), zwischen einer von der Werkstückhalterung (16) entfernten Warteposition und einer zu der Werkstückhalterung (16) hin verstellten Arbeitsposition, in welcher das an der Schraubmaschine (70) angeordnete Schraubwerkzeug (82) in Eingriff mit der Schraube ist oder bringbar ist, und/oder dass sie eine Fixiereinrichtung (51) zum Fixieren des Motorbauteils (100) bezüglich der Schraubmaschine (70) für das Einschrauben der mindestens einen Schraube (120) aufweist, wobei die Fixiereinrichtung (51) einen motorischen Antrieb zum Verstellen der Fixiereinrichtung (51) zwischen einer das Motorbauteil (100) fixierenden Fixierstellung und einer das Motorbauteil (100) freigebenden Lösestellung aufweist und/oder dass sie einen Bestandteil einer Bruchtrennvorrichtung (41) zum Bruchtrennen des Motorbauteil-Grundkörpers (100G) zur Herstellung der Motorbauteil-Komponenten (K1, K2) bildet.

15. Schraubverfahren zur Verbindung zweier aus einem Motorbauteil-Grundkörper (100G) anhand einer Bruchtrennung hergestellter oder herzustellender Motorbauteil-Komponenten (K1, K2), insbesondere eines Pleuelfußes (101) und eines Pleueldeckels (107), eines Motorbauteils (100) anhand mindestens einer Schraube (120), anhand einer Schraubvorrichtung (10), wobei die Schraubvorrichtung (10) eine Werkstückhalterung (16) zum Halten mindestens einer der Motorbauteil-Komponenten (K1, K2) sowie eine Schraubmaschine (70) zu einem Schrauben (120) der mindestens einen Schraube (120) in die Motorbauteil-Komponenten (K1, K2) aufweist, wobei die Schraubmaschine (70) einen Antriebsstrang mit einem insbesondere elektrischen Antriebsmotor (71) zum Antreiben eines Schraubwerkzeugs (82) aufweist, welches an einem Abtrieb (81) des Antriebsstrangs (170) angeordnet oder anordenbar ist, **gekennzeichnet durch**
- Schrauben der mindestens einen Schraube (120) in einem ersten Betriebsmodus der Schraubmaschine (70) und in einem zweiten Betriebsmodus der Schraubmaschine (70), wobei der Antriebsstrang (170) der Schraubmaschine (70) in dem ersten Betriebsmodus eine höhere maximale Drehzahl und ein kleineres maximales Drehmoment als in dem zweiten Betriebsmodus an seinem Abtrieb (81) aufweist und
- Schalten der Schraubmaschine (70) zwischen dem ersten Betriebsmodus und dem zweiten Betriebsmodus.
